# EUROPEAN PATENT APPLICATION

(11) **EP 4 343 904 A1**
(43) Date of publication of application: **27.03.2024**
(21) Application number: 22858779.6
(22) Date of filing: 18.08.2022
(51) Int. Cl.: H01M 10/04, H01M 50/46, H01M 50/105, H01M 50/178

(54) **ELECTRODE ASSEMBLY AND SECONDARY BATTERY COMPRISING SAME**

(30) Priority: 18.08.2021 KR 20210109087; 17.08.2022 KR 20220102965
(71) Applicant: LG Energy Solution, Ltd., Seoul 07335 (KR)
(72) Inventor: SHIN, Jin Young, Daejeon 34122 (KR); SUNG, Dong Wook, Daejeon 34122 (KR); KIM, Ji Eun, Daejeon 34122 (KR); BAE, Dong Hun, Daejeon 34122 (KR); SHIN, Hwan Ho, Daejeon 34122 (KR); YOON, Yeo Ju, Daejeon 34122 (KR)
(74) Representative: Plasseraud IP
(86) International application number: PCT/KR2022/012367
(87) International publication number: WO 2023/022542

(57) **Abstract**

An electrode assembly according to an embodiment of the present invention may include: a cell stack part including a plurality of stacked unit cells provided by integrally coupling electrodes and separators, which are alternately stacked; and a sub unit cell which is stacked on the cell stack part and is provided with a polymer film at the outermost side thereof, and in which the electrodes and the separators, which are alternately stacked, are integrally coupled together with the polymer film. The polymer film may be flat or be concavely bent toward the cell stack part so that a distance between a reference plane, which connects both edges in a width direction, and a central portion is less than 1 mm. The polymer film may have a thickness equal to or greater than that of the separator.

## Description

### TECHNICAL FIELD

### CROSS-REFERENCE TO RELATED APPLICATION

The present application claims the benefit of the priority of Korean Patent Application Nos. 10-2021-0109087, filed on August 18, 2021, and 10-2022-0102965, filed on August 17, 2022, which are hereby incorporated by reference in their entirety.

### TECHNICAL FIELD

The present invention relates to an electrode assembly and a secondary battery including the same, and more particularly, to a lamination and stack type electrode assembly and a secondary battery including the same.

### BACKGROUND ART

In general, secondary batteries are chargeable and dischargeable unlike primary batteries that are not chargeable and are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density per unit weight, a degree of its utilization is rapidly increasing.

Lithium secondary batteries are classified according to a structure of an electrode assembly of a positive electrode/separator/negative electrode structure. Representatively, the electrode assembly includes a jelly-roll type electrode structure having a structure in which long sheet-shaped positive and negative electrodes are wound with a separator therebetween, a simple stacked type electrode assembly in which a plurality of positive and negative electrodes, each of which is cut into a unit having a predetermined size, are sequentially stacked with a separator therebetween, a lamination and stack type electrode assembly in which a plurality of unit cells manufactured by a lamination process are stacked, and a stack/folding type electrode having a structure in which unit cells, in which a plurality of positive and negative electrodes, each of which is cut into a unit having a predetermined size, are stacked with a separator therebetween, are wound.

Particularly, in the case of the lamination and stack type electrode assembly, since the electrodes and the separator are not stacked one by one, a manufacturing time is shortened, productivity is high, and a plurality of electrodes are accurately aligned, so it has advantages of high efficiency and is widely used.

However, in the conventional lamination and stack type electrode assembly, it is common to disposed the separator on the outermost layer. However, in this case, bending occurs in the electrode assembly, which may cause internal short circuit.

### DISCLOSURE OF THE INVENTION

### TECHNICAL PROBLEM

An object of the present invention is to provide an electrode assembly in which bending is minimized, and a secondary battery including the same.

### TECHNICAL SOLUTION

An electrode assembly according to an embodiment of the present invention may include: a cell stack part including a plurality of stacked unit cells provided by integrally coupling electrodes and separators, which are alternately stacked; and a sub unit cell which is stacked on the cell stack part and is provided with a polymer film at the outermost side thereof, and in which the electrodes and the separators, which are alternately stacked, are integrally coupled together with the polymer film. The polymer film may be flat or be concavely bent toward the cell stack part so that a distance between a reference plane, which connects both edges in a width direction, and a central portion is less than 1 mm. The polymer film may have a thickness equal to or greater than that of the separator.

Adhesion of the polymer film within the sub unit cell may be stronger than that between the sub unit cell and the cell stack part.

The polymer film may have a thickness less three times than that of the separator.

The polymer film may be stacked on the electrode.

The polymer film may include at least one of polyethylene terephthalate, polyvinyl chloride, polyamide, polyimide, polyaramid, or polypropylene.

The number of electrodes provided in the sub unit cell may be less than that of electrodes provided in the unit cell.

The polymer film may be disposed at one side of the outermost sides of the electrode assembly, and the outermost separator of the cell stack part may be disposed at the other side of the outermost sides of the electrode assembly.

An electrode assembly according to an embodiment of the present invention may include: a cell stack part including a plurality of stacked unit cells provided by integrally coupling electrodes and separators, which are alternately stacked; a first sub unit cell which is stacked at one side of the cell stack part and is provided with a first polymer film at the outermost side thereof, and in which the electrodes and the separators, which are alternately stacked, are integrally coupled together with the first polymer film; and a second sub unit cell which is stacked at the other side of the cell stack and is provided with a second polymer film at the outermost side and in which the electrodes and the separators, which are alternately stacked, are integrally coupled together with the second polymer film. The first polymer film may be flat or be concavely bent toward the cell stack part so that a distance between a reference plane, which connects both edges in a width direction, and a central portion is less than 1 mm. Each of the first polymer film and the second polymer film may have a thickness equal to or greater than that of the separator.

The second polymer film may be flat, or a central portion of the second polymer film in a width direction may be convexly bent toward an opposite side of the cell stack part rather than both edges of the second polymer film.

A secondary battery according to an embodiment of the present invention may include: a pouch type battery case; and an electrode assembly accommodated in the battery case. The electrode assembly may include: a cell stack part including a plurality of stacked unit cells provided by integrally coupling electrodes and separators, which are alternately stacked; and a sub unit cell which is stacked on the cell stack part and is provided with a polymer film at the outermost side thereof, and in which the electrodes and the separators, which are alternately stacked, are integrally coupled together with the polymer film. The polymer film may be flat or be concavely bent toward the cell stack part so that a distance between a reference plane, which connects both edges in a width direction, and a central portion is less than 1 mm. The polymer film may have a thickness equal to or greater than that of the separator.

The polymer film may face an inner surface of one side of the battery case, and the outermost separator of the cell stack part may face an inner surface of an opposite side of the battery case.

A secondary battery according to an embodiment of the present invention may include: a pouch type battery case; and an electrode assembly accommodated in the battery case. The electrode assembly may include: a cell stack part including a plurality of stacked unit cells provided by integrally coupling electrodes and separators, which are alternately stacked; a first sub unit cell which is stacked at one side of the cell stack part and is provided with a first polymer film at the outermost side thereof, and in which the electrodes and the separators, which are alternately stacked, are integrally coupled together with the first polymer film; and a second sub unit cell which is stacked at the other side of the cell stack and is provided with a second polymer film at the outermost side and in which the electrodes and the separators, which are alternately stacked, are integrally coupled together with the second polymer film. The first polymer film may be flat or be concavely bent toward the cell stack part so that a distance between a reference plane, which connects both edges in a width direction, and a central portion is less than 1 mm. Each of the first polymer film and the second polymer film may have a thickness equal to or greater than that of the separator.

The first polymer film may face an inner surface of one side of the battery case, and the second polymer film may face an inner surface of an opposite side of the battery case.

### ADVANTAGEOUS EFFECTS

According to the preferred embodiment, since the polymer film has the sufficiently high rigidity, the bending of the electrode assembly may be effectively prevented or minimized.

In addition, in the case that the polymer film is disposed at only the outermost side of the electrode assembly, the polymer film may be disposed at one side that is concavely bent on both the outermost sides of the electrode assembly. As a result, the adhesion between the polymer film and the electrode may be stably maintained, and the state in which the bending of the electrode assembly may be minimized.

In addition, in the case of the embodiment in which the polymer film is disposed only at one side of the outermost sides of the electrode assembly, there may be the advantages that the decrease in energy density of the electrode assembly is minimized, and the electrode assembly is manufactured using the single type of sub unit cell.

In addition, in the case of the embodiment in which the polymer film is disposed on both the outermost sides of the electrode assembly, the bending of the electrode assembly may be more effectively prevented or minimized.

In addition, the effects that are obvious to those skilled in the art may be predicted from the configurations according to the embodiment of the present invention.

### BRIEF DESCRIPTION OF THE DRAWINGS

FIG. 1 is plan view of the secondary battery according to an embodiment of the present invention.
FIG. 2 is an exploded perspective view illustrating the secondary battery according to an embodiment of the present invention.
FIG. 3 is a cross-sectional view illustrating a stack structure of the electrode assembly according to an embodiment of the present invention.
FIG. 4 is a cross-sectional view illustrating a modified example of the electrode assembly illustrated in FIG. 3.
FIG. 5 is an enlarged side view illustrating a polymer film of the electrode assembly according to an embodiment of the present invention.
FIG. 6 is a cross-sectional view illustrating a stack structure of an electrode assembly according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

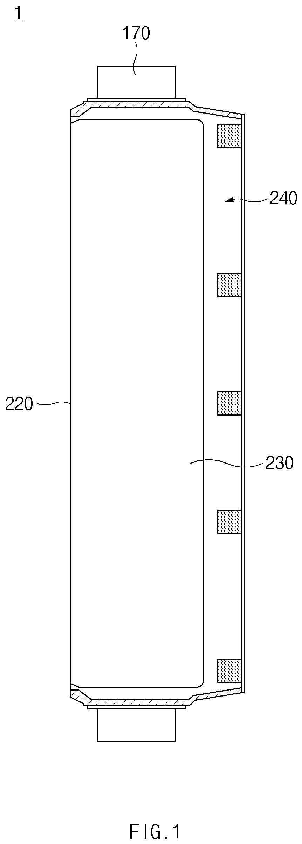

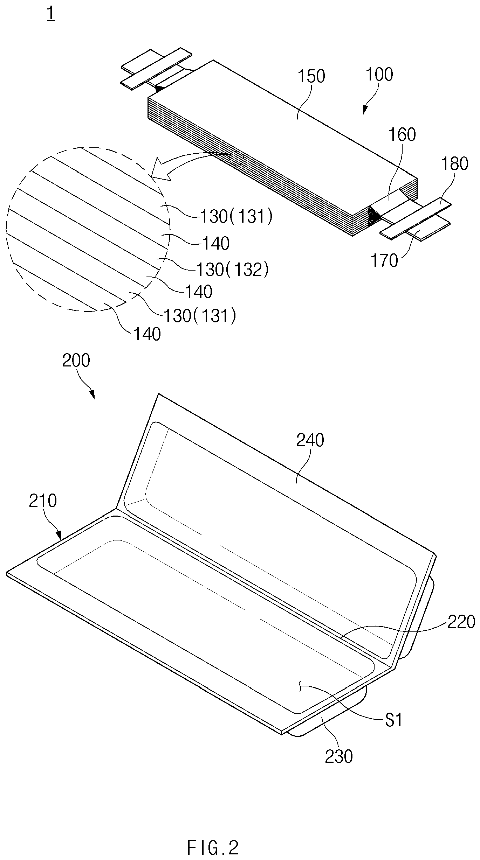

FIG. 1 is plan view of the secondary battery according to an embodiment of the present invention, and FIG. 2 is an exploded perspective view illustrating the secondary battery according to an embodiment of the present invention.

The secondary battery 1 according to the present invention may include an electrode assembly 100 and a pouch-type battery case 200 accommodating the electrode assembly 100.

The electrode assembly 100 may include a plurality of electrodes 130 and a plurality of separators 140, which are alternately stacked, and a polymer film 150 disposed at the outermost side. The plurality of electrodes 130 may include a first electrode 131 and a second electrode 132, which are alternately stacked with a separator 140 therebetween and have polarities opposite to each other. For example, the first electrode 131 may be a positive electrode, and the second electrode 132 may be a negative electrode.

In addition, the polymer film 150 may be disposed at at least one of both the outermost sides of the electrode assembly 100 and may be stacked on the electrode 130.

A detailed configuration of the electrode assembly 100 will be described later in detail.

The electrode assembly 100 may include a plurality of electrode tabs 160 welded to each other. The plurality of electrode tabs 160 may be connected to the plurality of electrodes 130 and protrude from the electrode assembly 100 to the outside to serve as a passage through which electrons move between the inside and the outside of the electrode assembly 100.

The electrode tab 160 connected to the first electrode 131 and the electrode tab 160 connected to the second electrode 132 may protrude in different directions with respect to the electrode assembly 10. For example, the electrode tab 160 connected to the first electrode 131 and the electrode tab 160 connected to the second electrode 132 may protrude in opposite directions with respect to a full length direction of the electrode assembly 100. However, the present invention is not limited thereto, and the electrode tab 160 connected to the first electrode 131 and the electrode tab 160 connected to the second electrode 132 may protrude in parallel with each other.

A lead 170 that supplies electricity to the outside of the secondary battery 1 may be connected to the plurality of electrode tabs 160 through spot welding or the like. The lead 170 may have one end connected to the plurality of electrode tabs 160 and the other end protruding to the outside of the battery case 200.

A portion of the electrode lead 170 may be surrounded by an insulating part 180. For example, the insulating part 180 may include an insulating tape. The insulating part 180 may be disposed between a pair of terraces 240 of the battery case 200 to be described later, and in this state, the pair of terraces 240 may be thermally fused to each other. In this case, a portion of the pair of terraces 240 may be thermally fused to the insulating part 180. Thus, the insulating part 180 may prevent the electricity generated from the electrode assembly 100 from flowing to the battery case 200 through the lead 170 and may maintain sealing of the battery case 200.

The battery case 200 may be provided by sealing a pair of cases 210 connected to each other through a folding part 220. However, the present invention is not limited thereto, and the pair of cases 210 may be sealed in a state of being separated from each other to provide the battery case 200.

In addition, at least one of the pair of cases 210 may be provided with an accommodation part 230 having a recessed shape. The accommodation part 230 may be recessed by a predetermined depth from the terrace 240 to define a recessed space S1. Hereinafter, a case in which the accommodation part 230 is defined in each of the pair of cases 210 will be described as an example.

The accommodation parts 230 of the pair of cases 210 may be connected to each other through the folding part 220. That is, the folding part 220 may be disposed between the pair of accommodation parts 230, and in a state in which the pouch 20 is unfolded, the folding part 220 may be referred to as a bridge. The folding part 220 may be elongated in the full-length direction of the battery case 200.

In a state in which the electrode assembly 100 is accommodated in the recessed space S1 of any one of the accommodation parts 230, the folding part 220 may be folded so that the pair of accommodation parts 230 face each other. Thus, the other accommodation part 230 may cover the electrode assembly 100 from above. That is, the recessed spaces S1 of the accommodation parts 230 may communicate with each other, and the electrode assembly 100 may be accommodated in the recessed space S1.

Each case 210 may include a terrace 240 disposed around the accommodation part 230. In more detail, the terrace 240 may be connected to an upper end of a circumferential surface of the accommodation part 230. The terrace 240 of each case 210 may have an approximately ' 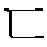 ' shape.

In a state in which the electrode assembly 100 is disposed between the pair of accommodation parts 230 of the battery case 200, the folding part 220 may be folded, and the pair of terraces 240 may be fused with each other to provide the sealing part, thereby providing the secondary battery 1 in which the pair of cases 210 are sealed with each other.

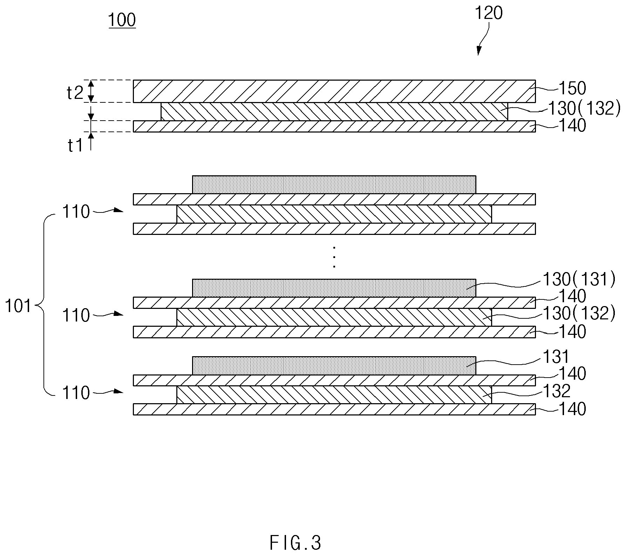

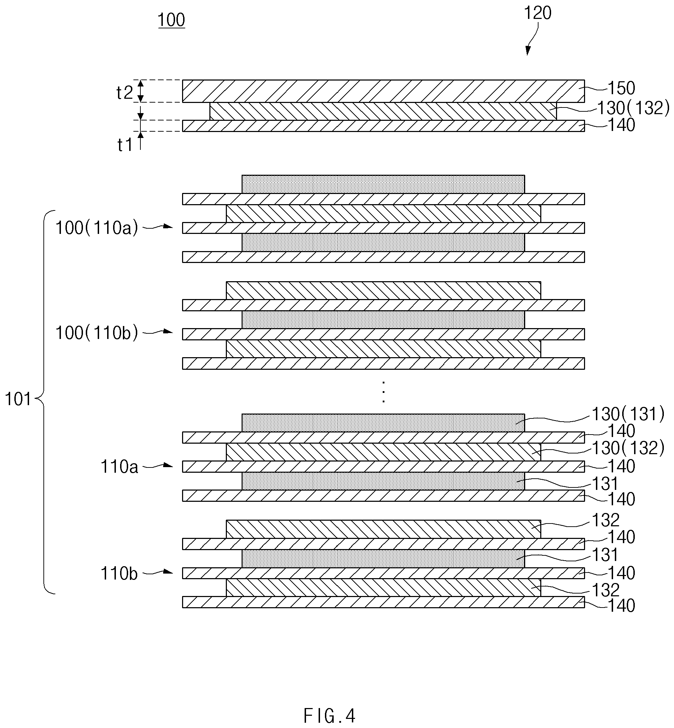

FIG. 3 is a cross-sectional view illustrating a stack structure of the electrode assembly according to an embodiment of the present invention, and FIG. 4 is a cross-sectional view illustrating a modified example of the electrode assembly illustrated in FIG. 3.

The electrode assembly 100 according to an embodiment of the present invention may include a cell stack part 101 including a plurality of unit cells 110 stacked on each other, and a sub unit cell 120 stacked on the cell stack part 101.

The cell stack part 101 may have a structure in which the plurality of unit cells 110 are stacked so that a plurality of electrodes 130 and a plurality of separators 140 are alternately stacked.

The cell stack part 101 may have a structure in which one type of unit cells 110 is repeatedly stacked as illustrated in FIG. 3, or have a structure in which two types of unit cells 110 are stacked in a predetermined order as illustrated in FIG. 4.

Each of the unit cells 110 may be provided by integrally coupling the electrodes 130 and the separator 140, which are alternately stacked, to each other. That is, the electrode 130 and the separator 140 of each of the unit cells 110 may adhere to each other by a lamination process or a rolling process.

In addition, the plurality of unit cells 110 provided in the cell stack part 101 may not adhere to each other or adhere to each other with adhesive force less than that between the electrode 130 and the separator 140 in each of the unit cells 110. Here, the adhesive force may mean peeling force. Accordingly, the cell stack part 101 may be easily separated in units of the unit cells 110.

The number of electrodes 130 and the number of separators 140, which are provided in each unit cell 110, may be the same. For example, as illustrated in FIG. 3, the unit cell 110 may be provided by stacking two electrodes 130 and two separators 140. For another example, as illustrated in FIG. 4, the unit cell 110 may be provided by stacking three electrodes 130 and three separators 140.

The electrode 130 may be disposed at one end of each unit cell 110, and the separator 140 may be disposed at the other end of each unit cell 110. Thus, the electrode 130 may be disposed at one side of the outermost sides of the cell stack part 101 provided by stacking the plurality of unit cells 110, and the separator 140 may be disposed at the other side of the outermost sides.

As illustrated in FIG. 3, when the cell stack part 101 is provided by repeatedly stacking one type of unit cells 110, each of the unit cell 110 may have a four-layer structure, in which a first electrode 131, a separator 140, a second electrode 132, and a separator 140 are sequentially stacked, or have a structure (for example, an eight-layer structure or a twelve-layer structure) in which the four-layer structure is repeatedly disposed.

On the other hand, as illustrated in FIG. 4, when the cell stack part 101 is provided by stacking two or more types of unit cells 110 in a predetermined order, the four-layer structure or the structure, in which the four-layer structure are repeatedly disposed, may be provided by a combination of two or more types of unit cells 110.

Hereinafter, a case in which the plurality of unit cells 110 includes a first unit cell 110a and a second unit cell 110b, which are alternately stacked, will be described as an example.

The first electrode 131 may be disposed at one end of the first unit cell 110a, and the separator 140 may be disposed at the other end of the first unit cell 110a. The second electrode 132 may be disposed at one end of the second unit cell 110b, and the separator 140 may be disposed at the other end of the second unit cell 110b. Thus, the four-layer structure or the structure in which the four-layer structure is repeatedly disposed may be provided by the combination of the first unit cell 110a and the second unit cell 110b, which are adjacent to each other.

For example, the first unit cell 110a may have a six-layer structure, in which a first electrode 131, a separator 140, a second electrode 132, a separator 140, a first electrode 131, and a separator 140 are sequentially stacked, and the second unit cell 110b may have a six-layer structure, in which a second electrode 132, a separator 140, a first electrode 131, a separator 140, a second electrode 132, and a separator 140 are sequentially stacked. In this case, the six-layer structure of the first unit cell 110a and the six-layer structure of the second unit cell 110b are stacked to provide a twelve-layer structure in which the four-layer structure is repeatedly disposed.

The sub unit cell 120 is provided with a polymer film 150 at the outermost side, and the electrodes 130 and the separator 140, which are stacked alternately, may be integrally coupled together with the polymer film 150. That is, the electrode 130, the separator 140, and the polymer film 150 of the sub unit cell 120 may be in a state of adhering to each other by a lamination process or a rolling process.

The polymer film 150 will be described in detail later.

The sub unit cell 120 may not adhere to the cell stack part 101 or may adhere to the cell stack part 101 with adhesive force less than that between the electrode 130, the separator 140, and the polymer film 150 in the sub unit cell 120. Here, the adhesive force may mean peeling force. Thus, the sub unit cell 120 may be easily separated from the cell stack part 101.

The number of electrodes 130 provided in the sub unit cell 120 may be less than the number of electrodes 130 provided in each unit cell 110 of the cell stack part 101. For example, as illustrated in FIG. 3, each unit cell 110 may include two electrodes 130, and the sub unit cell 120 may include one electrode 130. As another example, as illustrated in FIG. 4, each unit cell 110 may include three electrodes, and the sub unit cell 120 may include one electrode 130.

The polymer film 150 may be disposed at one side of the outermost sides of the sub unit cell 120, and the separator 140 may be disposed at the other of the outermost sides of the sub unit cell 120. Thus, the polymer film 150 disposed at the outermost side of the sub unit cell 120 may be disposed at the outermost side of the electrode assembly 100, and the separator 140 disposed at the other side of the outermost sides of the sub unit cell 120 may be stacked on the electrode 130 disposed at one side of the outermost sides of the cell stack part 101. In addition, the separator 140 disposed at the other side of the outermost sides of the cell stack part 101 may be disposed at the outermost side of the electrode assembly 100.

That is, the polymer film 150 may be disposed at one side of the outermost sides of the electrode assembly 100, and the outermost separator 140 of the cell stack part 101 may be disposed at the other side of the outermost sides of the electrode assembly 100. Thus, in a state in which the electrode assembly 100 is accommodated in the battery case 200 (see FIG. 2), the polymer film 150 may face an inner surface of one side of the battery case 200, and the outermost separator 140 of the cell stack part 101 may face an inner surface on an opposite side of the battery case 200.

As described above, since the polymer film 150 is disposed only at either side of both the outermost sides of the electrode assembly 100, the electrode assembly 100 may be manufactured using a single type, i.e., one sub unit cell 120. In addition, as will be described later, since a thickness t2 of the polymer film 150 is equal to or greater than a thickness t1 of the separator 140, a decrease in energy density of the electrode assembly 100 may be minimized.

In addition, the polymer film 150 may be stacked on the electrode 130. The polarity of the electrode 130 adjacent to the polymer film 150 in the sub unit cell 120 may be the same as that of the electrode 130 adjacent to the outermost separator 140 of the cell stack part 101. For example, in the sub unit cell 120, the polymer film 150 may be adjacent to the second electrode 132, and the outermost separator 140 of the cell stack part 101 may also be adjacent to the second electrode 132.

The polymer film 150 may have insulating properties that do not have electrical conductivity. In more detail, the polymer film 150 may include at least one of polyethylene terephthalate (PET), polyvinyl chloride (PVC), polyamide (PA), polyimide (PI), polyaramid, or polypropylene (PP).

The polymer film 150 has stiffness greater than that of the separator 140 and may withstand bending stress greater than that of the separator 140.

In more detail, since the separator 140 includes a large number of fine pores and is sufficiently impregnated with an electrolyte, rigidity may be somewhat reduced. On the other hand, since the polymer film 150 does not include pores, and a degree of impregnation in the electrolyte is significantly reduced, the polymer film 150 may have rigidity significantly greater than that of the separator 140. Thus, since the polymer film 150 is disposed at the outermost portion of the electrode assembly 100, the bending of the electrode assembly 100 may be minimized.

In addition, in order to ensure that the polymer film 150 has sufficiently high rigidity, the thickness t2 of the polymer film 150 may be greater than or equal to the thickness t1 of the separator 140 or may be preferably greater the thickness t1 of the separator 140. However, when the thickness t2 of the polymer film 150 is too thick, since the energy density of the electrode assembly 100 is reduced, the thickness t2 of the polymer film 150 may be less three times than the thickness t1 of the separator 140.

However, the present invention is not limited thereto, and if the rigidity of the polymer film 150 is sufficiently high, the thickness t2 of the polymer film 150 may be less than the thickness t1 of the separator 140. For example, the thickness t2 of the polymer film 150 may be approximately 10 µm.

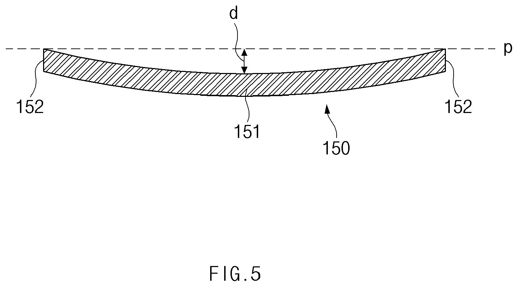

FIG. 5 is an enlarged side view illustrating the polymer film of the electrode assembly according to an embodiment of the present invention.

The polymer film 150 disposed at the outermost side of the electrode assembly 100 may be flat or finely bent.

When the fine bending occurs in the electrode assembly 100, a central portion 151 in a width direction of the polymer film 150 may be bent to be concave toward the cell stack portion 101 rather than both edges 152.

That is, the polymer film 150 may be disposed at one side that is bent concavely among both the outermost sides of the electrode assembly 100. Thus, both the edges of the polymer film 150 and the central portion of the adjacent electrode 130 in the width direction may more strongly adhere to the polymer film 150. That is, the edge of the polymer film 150 may be prevented from being peeled off from the electrode 130 little by little.

Thus, the adhesion between the polymer film 150 and the electrode 130 may be stably maintained, and the bending of the electrode assembly 100 may be more effectively reduced due to the high rigidity of the polymer film 150.

In more detail, a distance between a reference plane P passing through both edges 152 in the width direction of the polymer film 150 and one outer surface (e.g., a top surface) of the polymer film 150 may gradually increase toward the central portion 151. The reference plane P may be a virtual plane, and the one outer surface of the polymer film 150 may be a surface that is opposite to the surface adhering to the electrode 130.

In addition, a maximum distance d between the reference plane P and the outer one surface of the polymer film 150 may be less than 1 mm. That is, a distance d between the reference plane P and the central portion 151 may be less than 1 mm.

That is, the polymer film 150 may be flat, or the distance d between the reference plane P connecting both the edges 152 in the width direction and the central portion 151 may be less than 1 mm so as to be concavely bent toward the cell stack part 101.

Hereinafter, an experimental example showing an anti-bending effect of the polymer film 150 will be described.

As Experimental Example 1, a stack having a seven-layer structure in which four separators, each of which has a width of 2 cm, a length of 9 cm, and a thickness of 15 µm, and three negative electrodes, each of which has a width of 2 cm and a length of 9 cm, were alternately stacked between a pair of protective sheets by a press. Here, a separator was disposed at the uppermost and lowermost ends of the stack, and each of the protective sheets includes a polyethylene terephthalate (PET) film having a width of 7 cm and a length of 10 cm, which is in contact with the stack, and a paper having a width of 7 cm and a length of 10 cm and covering the PET film. Then, the press was heated to a temperature of 60 degrees Celsius and pressed a pressure of 5.2 MPa. Thereafter, a flat object was placed on both edges of the uppermost separator of the integrally bonded stack in the width direction, and then, a distance between a bottom surface of the object and a central portion of a top surface of the uppermost separator was measured. The distance refers to a degree of bending of the stack.

As Experimental Example 2, the same separator was additionally stacked on the uppermost end of the stack of Experimental Example 1, and other conditions were equally maintained. That is, two separators are disposed at the uppermost end of the stack of Experimental Example 2.

As Experimental Example 3, the separator disposed at the uppermost end of the stack of Experimental Example 1 was replaced with a polymer film having a width of 2 cm, a length of 9 cm, and a thickness of 35 µm and made of a polyethylene terephthalate (PET) material, and other conditions were equally maintained. That is, the polymer film is disposed at the uppermost end of the stack of Experimental Example 3. Then, a flat object was placed on both edges of the polymer film in the width direction, and then, a distance between a bottom surface of the object and a central portion of a top surface of the uppermost separator was measured.

As a result, a bending degree of the stack according to each Experimental Examples was measured to be 2.5 mm in Experimental Example 1, to be 2.0 mm in Experimental Example 2, and to be 0.3 mm in Experimental Example 3.

That is, it is confirmed that, when the polymer film is placed at one side of the outermost sides of the stack instead of the separator, a degree of bending of the stack is significantly reduced compared to that of using the plurality of overlapping separators on the outermost surface.

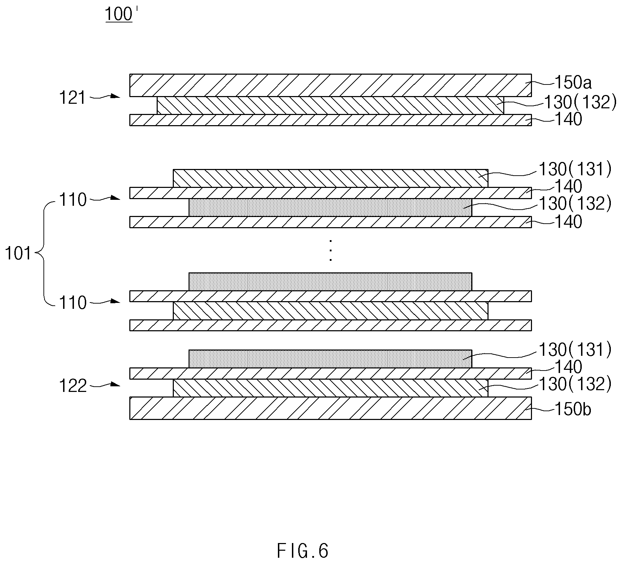

FIG. 6 is a cross-sectional view illustrating a stack structure of an electrode assembly according to another embodiment of the present invention.

Hereinafter, contents duplicated with the previously described contents will be cited, and described with a focus on the differences.

In an electrode assembly 100' according to this embodiment, polymer films 150a and 150b may be disposed on both outermost sides, respectively. Thus, as compared to the above-described electrode assembly 100 according to the foregoing embodiment, bending of the electrode assembly 100' according to this embodiment may be further minimized.

In more detail, the electrode assembly 100' may include a cell stack part 101, a first sub unit cell 121 stacked at one side of the cell stack part 101 and provided with a first polymer film 150a at the outermost side, and a second sub unit cell 122 stacked at the other side of the cell stack part 101 and provided with a second polymer film 150b at the outermost side.

The first sub unit cell 121 and the second sub unit cell 122 may include different numbers of electrodes 13. In more detail, the number of electrodes 130 provided in the first sub unit cell 121 may be less than the number of electrodes 130 provided in the second sub unit cell 122. Also, the number of electrodes 130 provided in the second sub unit cell 122 may be the same as the number of electrodes 130 provided in each unit cell 110 of the cell stack part 101. For example, each of the unit cells 110 and the second sub unit cell 122 may include two electrodes 130, and the first sub unit cell 121 may include one electrode 130.

The first polymer film 150a may be disposed at one side of the outermost sides of the first sub unit cell 121, and the separator 140 may be disposed at the other side of the outermost sides of the first sub unit cell 121. The electrode 130 may be disposed at one side of the outermost sides of the second sub unit cell 122, and the second polymer film 150b may be disposed on the other side of the outermost sides of the second sub unit cell 122.

Thus, the first polymer film 150 disposed at the outermost side of the first sub unit cell 121 may be disposed at the outermost side of the electrode assembly 100', and the separator 140 disposed at the other side of the outermost side of the first sub unit cell 121 may be stacked on the electrode 130 disposed at one side of the outermost side of the cell stack part 101. In addition, the electrode 130 disposed at one side of the outermost sides of the second sub unit cell 122 may be stacked on the separator 140 disposed on the other side of the outermost sides of the cell stack part 101, and the second polymer film 150b disposed at the other side of the outermost sides of the second sub unit cell 122 may be disposed at the outermost side of the electrode assembly 100'.

That is, the first polymer film 150a may be disposed at one side of the outermost sides of the electrode assembly 100', and the second polymer film 150b may be disposed on the other side of the outermost sides of the electrode assembly 100'. Therefore, in a state in which the electrode assembly 100' is accommodated in the battery case 200 (see FIG. 2), the first polymer film 150a may face an inner surface of one side of the battery case 200, and the second polymer film 150b may face an inner surface of an opposite side of the battery case 200.

The first polymer film 121 and the second polymer film 122 may be stacked on the electrode 130.

The electrode 130 adjacent to the first polymer film 150a in the first sub unit cell 121 may have the same polarity as the electrode 130 adjacent to the second polymer film 150b in the second sub unit cell 122. For example, in the first sub unit cell 121, the first polymer film 150a may be adjacent to the second electrode 132, and in the second sub unit cell 122, the second polymer film 150b may also be adjacent to the second electrode 132.

Each of the first polymer film 150a and the second polymer film 150b may have a thickness greater than that of the separator 140. The first polymer film 150a and the second polymer film 150b may have the same thickness, but is not limited thereto. In addition, the first polymer film 150a and the second polymer film 150b may be made of the same material, but is not limited thereto.

The first polymer film 150a and the second polymer film 150b may be flat or finely bent.

When fine bending occurs in the electrode assembly 100', the first polymer film 150a and the second polymer film 150a may be bent in the same direction.

For example, a central portion of the first polymer film 150a in a width direction may be bent concavely toward the cell stack part 101 rather than both edges of the first polymer film 150a, and a central portion of the second polymer film 150b in a width direction may be convexly bent toward an opposite side of the cell stack part 101 rather than both edges of the second polymer film 150b.

In this case, as in the embodiment described above, the first polymer film 150a may be flat, or a distance d between a reference plane P connecting both the edges 152 (see FIG. 5) in the width direction and a central portion 151 may be less than 1 mm so as to be concavely bent toward the cell stack part 101. In addition, the second polymer film 150b may also be flat or may be slightly bent with a curvature that is the same as or similar to that of the first polymer film 150a.

In this embodiment, energy density of the electrode assembly 100' may slightly increase, but bending of the electrode assembly 100 may be more effectively prevented by the pair of polymer films 150a and 150b having high rigidity.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims, and all differences within the scope will be construed as being included in the present disclosure.

**[Description of the Symbols]**

| | | | |
|---|---|---|---|
| 1: | Secondary battery | 100: | Electrode assembly |
| 101: | Cell stack part | 110: | Unit cell |
| 120: | Sub unit cell | 130: | Electrode |
| 131: | First electrode | 132: | Second electrode |
| 140: | Separator | 150: | Polymer film |
| 200: | Battery case | | |

## Claims

1. An electrode assembly comprising:
a cell stack part comprising a plurality of unit cells stacked on each other, which unit cell is provided by integrally coupling electrodes and separators, which are alternately stacked; and
a sub unit cell which is stacked on the cell stack part and is provided with a polymer film at the outermost side thereof, and in which the electrodes and the separators, which are alternately stacked, are integrally coupled together with the polymer film,
wherein the polymer film is flat or concavely bent toward the cell stack part so that a distance between a reference plane, which connects both edges in a width direction, and a central portion is less than 1 mm, and
the polymer film has a thickness equal to or greater than that of the separator.

2. The electrode assembly of claim 1, wherein adhesion of the polymer film within the sub unit cell is stronger than that between the sub unit cell and the cell stack part.

3. The electrode assembly of claim 2, wherein the polymer film has a thickness less three times than that of the separator.

4. The electrode assembly of claim 1, wherein the polymer film is stacked on the electrode.

5. The electrode assembly of claim 1, wherein the polymer film comprises at least one of polyethylene terephthalate, polyvinyl chloride, polyamide, polyimide, polyaramid, or polypropylene.

6. The electrode assembly of claim 1, wherein the number of electrodes provided in the sub unit cell is less than that of electrodes provided in the unit cell.

7. The electrode assembly of claim 1, wherein the polymer film is disposed at one side of the outermost sides of the electrode assembly, and
the outermost separator of the cell stack part is disposed at the other side of the outermost sides of the electrode assembly.

8. An electrode assembly comprising:
a cell stack part comprising a plurality of unit cells stacked to each other, which unit cell is provided by integrally coupling electrodes and separators, which are alternately stacked;
a first sub unit cell which is stacked at one side of the cell stack part and is provided with a first polymer film at the outermost side thereof, and in which the electrodes and the separators, which are alternately stacked, are integrally coupled together with the first polymer film; and
a second sub unit cell which is stacked at the other side of the cell stack part and is provided with a second polymer film at the outermost side thereof and in which the electrodes and the separators, which are alternately stacked, are integrally coupled together with the second polymer film,
wherein the first polymer film is flat or concavely bent toward the cell stack part so that a distance between a reference plane, which connects both edges in a width direction, and a central portion is less than 1 mm, and
each of the first polymer film and the second polymer film has a thickness equal to or greater than that of the separator.

9. The electrode assembly of claim 8, wherein the second polymer film is flat, or a central portion of the second polymer film in a width direction is convexly bent toward an opposite side of the cell stack part rather than both edges of the second polymer film.

10. A secondary battery comprising:
a pouch type battery case; and
the electrode assembly accommodated in the battery case,
wherein the electrode assembly comprises:
a cell stack part comprising a plurality of stacked unit cells provided by integrally coupling electrodes and a separators, which are alternately stacked; and
a sub unit cell which is stacked on the cell stack part and is provided with a polymer film at the outermost side thereof, and in which the electrodes and the separators, which are alternately stacked, are integrally coupled together with the polymer film,
wherein the polymer film is flat or concavely bent toward the cell stack part so that a distance between a reference plane, which connects both edges in a width direction, and a central portion is less than 1 mm, and
the polymer film has a thickness equal to or greater than that of the separator.

11. The secondary battery of claim 10, wherein the polymer film faces an inner surface of one side of the battery case, and
the outermost separator of the cell stack part faces an inner surface of an opposite side of the battery case.

12. A secondary battery comprising:
a pouch type battery case; and
an electrode assembly accommodated in the battery case,
wherein the electrode assembly comprises:
a cell stack part comprising a plurality of stacked unit cells provided by integrally coupling electrodes and separators, which are alternately stacked;
a first sub unit cell which is stacked at one side of the cell stack part and is provided with a first polymer film at the outermost side thereof, and in which the electrodes and the separators, which are alternately stacked, are integrally coupled together with the first polymer film; and
a second sub unit cell which is stacked at the other side of the cell stack and is provided with a second polymer film at the outermost side and in which the electrodes and the separators, which are alternately stacked, are integrally coupled together with the second polymer film,
wherein the first polymer film is flat or concavely bent toward the cell stack part so that a distance between a reference plane, which connects both edges in a width direction, and a central portion is less than 1 mm, and
each of the first polymer film and the second polymer film has a thickness equal to or greater than that of the separator.

13. The secondary battery of claim 12, wherein the first polymer film faces an inner surface of one side of the battery case, and
the second polymer film faces an inner surface of an opposite side of the battery case.
